# EUROPÄISCHE PATENTANMELDUNG

(11) **EP 1 752 418 A1**
(43) Veröffentlichungstag der Anmeldung: **14.02.2007**
(21) Anmeldenummer: 06016044.7
(22) Anmeldetag: 01.08.2006
(51) Int. Cl.: C01B 23/00, A62D 3/00

(54) **Verfahren und Vorrichtung zur Gewinnung von Krypton und/oder Xenon**

(30) Priorität: 09.08.2005 DE 102005037576; 20.09.2005 EP 05020457
(71) Anmelder: Linde Aktiengesellschaft, 65189 Wiesbaden (DE)
(72) Erfinder: Meilinger, Matthias, Dr., 82515 Wolfratshausen (DE)
(74) Vertreter: Imhof, Dietmar

(57) **Zusammenfassung**

Das Verfahren und die Vorrichtung dienen zur Gewinnung von Krypton und/oder Xenon durch Tieftemperatur-Luftzerlegung. Krypton und Xenon werden zu einem Krypton-Xenon-Konzentrat angereichert. Mittels Destillation wird Krypton und/oder Xenon aus dem Krypton-Xenon-Konzentrat gewonnen. Das Krypton-Xenon-Konzentrat wird vor der Destillation über ein Katalysatorbett geleitet wird, das TiO₂ und/oder ZrO₂ enthält. Dabei wird mindestens eine in dem Krypton-Xenon-Konzentrat enthaltene Halogenverbindung umgesetzt.

## Beschreibung

Die Erfindung betrifft ein Verfahren zur Gewinnung von Krypton und/oder Xenon durch Tieftemperatur-Luftzerlegung, wobei Krypton und Xenon zu einem Krypton-Xenon-Konzentrat angereichert werden und mittels Destillation Krypton und/oder Xenon aus dem Krypton-Xenon-Konzentrat gewonnen werden.

Die Grundlagen der Tieftemperaturzerlegung von Luft im Allgemeinen sowie der Aufbau von Rektifiziersystemen zur Stickstoff-Sauerstoff-Trennung im Speziellen sind in der Monografie "Tieftemperaturtechnik" von Hausen/Linde (2. Auflage, 1985) und in einem Aufsatz von Latimer in Chemical Engineering Progress (Vol. 63, No.2, 1967, Seite 35) beschrieben. Die Hochdrucksäule wird unter einem höheren Druck als die Niederdrucksäule betrieben; die beiden Säulen stehen vorzugsweise in Wärmeaustauschbeziehung zueinander, beispielsweise über einen Hauptkondensator, in dem Kopfgas der Hochdrucksäule gegen verdampfende Sumpfflüssigkeit der Niederdrucksäule verflüssigt wird. Das Rektifiziersystem der Erfindung kann als klassisches Doppelsäulensystem ausgebildet sein, aber auch als Drei- oder Mehrsäulensystem. Zusätzlich zu den Kolonnen zur Stickstoff-Sauerstoff-Trennung können weitere Vorrichtungen zur Gewinnung anderer Luftkomponenten, insbesondere von Edelgasen aufweisen, beispielsweise eine Argongewinnung.

Zur Gewinnung von reinem Krypton und Xenon werden üblicherweise die schweren Komponenten des Sauerstoffsumpfs einer Tieftemperatur-Luftzerlegungsanlage (der zum Beispiel im Sumpf einer Krypton-Xenon-Anreicherungssäule anfällt) um den Faktor 3000 bis 5000 im Vergleich zur Einsatzluft angereichert. Diese angereicherte Flüssigkeit ("Krypton-Xenon-Konzentrat") enthält neben beispielsweise 3000 bis 5000 Vppm Krypton und 200 bis 400 Vppm Xenon auch mehrere Hundert Vppm Kohlenwasserstoffe, CO₂, N₂O und Spuren von fluorhaltigen Komponenten wie zum Beispiel CF₄, SF₆ und C₂F₆.

Solche halogenierten Kohlenstoffe sind auch in sauberer Luft in einer Konzentration von jeweils wenigen Hundert mol ppt (parts per trillion = 10⁻¹²) vorhanden. Auf Grund der hohen Anreicherung zur Krypton- und/oder Xenon-Gewinnung stellen manche halogenierten Verbindungen störende und schwer abzutrennende Verunreinigungen dar. Besonders die vollfluorierten Verbindungen sind sehr inert und können nur bei sehr hohen Temperaturen abgebaut werden.

In einer Tieftemperatur-Luftzerlegungsanlage, deren Einsatzluft in Molekularsieb-Adsorbem gereinigt wird, gelangen prinzipiell nur diejenigen halogenierten Verbindungen in den Sauerstoffsumpf, die auch als Bestandteile der Einsatzluft die Molsiebadsorber passieren können. Die Hauptaufgabe der Molsiebadsorber besteht in der Reinigung der Einsatzluft von CO₂ und H₂O. Neben den oft in der Literatur zitierten Verbindungen CF₄, C₂F₆ und SF₆ brechen nachweislich auch NF₃, CCIF₃ und C₃F₈ noch vor CO₂ durch einen Adsorber, der mit dem Molekularsieb 13X gefüllt ist, das regelmäßig zur Luftreinigung eingesetzt wird. Damit stellen sie mögliche Verunreinigungen des Krypton-Xenon-Konzentrats dar.

Das im Sauerstoffsumpf der Tieftemperatur-Luftzerlegungsanlage erzeugte Krypton-Xenon-Konzentrat kann an Ort und Stelle in weiteren Verfahrensschritten zu reinem Krypton und/oder Xenon getrennt werden. Alternativ wird es gespeichert, zum Beispiel in einem Flüssigtank, und an einem anderen Ort weiterverarbeitet.

Dabei wird das Krypton-Xenon-Konzentrat in der Regel verdampft und bei etwa 500°C über einem platin- oder palladiumhaltigen Katalysator umgesetzt, auf dem Methan vollständig zu CO₂ und H₂O verbrannt und zusätzlich N₂O zu Stickstoff und Sauerstoff gespalten wird. Die fluorhaltigen Verbindungen werden nur zum kleinen Teil umgesetzt. Das resultierende Gas wird in Molsiebadsorbem von CO₂ und Feuchtigkeit befreit und einer Tieftemperaturtrennung zugeführt. Dort müssen Krypton und oder Xenon nicht nur von Sauerstoff, Argon und Stickstoff durch Destillation abgetrennt werden, sondem auch von den oben genannten fluorierten Verbindungen. Letzteres erfordert besonders hohen Aufwand.

Deshalb wurde in EP 863375 A1 (= US 6063353) ein zusätzlicher Adsorptionsschritt mit einem festen Sorbens, welches Phyllosilikate enthält, vorgeschlagen, um fluor-und/oder chlorhaltige Verunreinigungen, insbesondere Fluorkohlenwasserstoffe, CF₄ und/oder SF₆ aus dem Krypton-Xenon-Konzentrat abzutrennen.

Der Erfindung liegt die Aufgabe zugrunde, die Abtrennung von Halogenverbindungen auf wirtschaftlich besonders günstige Weise zu realisieren.

Diese Aufgabe wird dadurch gelöst, dass das Krypton-Xenon-Konzentrat über ein Bett geleitet wird, das einen Katalysator auf Basis eines Übergangsmetalloxids, insbesondere auf TiO₂- oder ZrO₂-Basis, aufweist und in dem mindestens eine vollhalogenierte Verbindung, insbesondere mindestens eine vollfluorierte Verbindung, umgesetzt wird.

"Vollhalogenierte" Verbindungen und "vollfluorierte" ("perfluorierte") Verbindungen beinhalten keine Wasserstoffatome, die eine katalytische Umsetzung bei sehr viel milderen Bedingungen erlauben würden.

Derartige katalytische Umsetzungen sind in der Tieftemperatur-Luftzerlegung und in der Krypton- und Xenon-Gewinnung bisher unbekannt. Sie werden aber bereits in der Halbleiterfertigung zur Umsetzung verbrauchter Ätzgase eingesetzt. Dort werden vollfluorierte (= perfluorierte, englisch: perfluorinated) Kohlenstoffe wie CF₄, C₂F₆ oder C₃F₈ oder vollfluorierte Verbindungen wie NF₃ und SF₆ über Katalysatoren auf TiO₂-und ZrO₂-Basis umgesetzt. Bei der Erfindung wird nun eine derartige Methode zur Entfernung von vollhalogenierten Verbindungen aus dem Krypton-Xenon-Konzentrat angewendet.

Im Gegensatz zu bisher bei der Reinigung von Krypton-Xenon-Konzentrat verwendeten Katalysatoren verhalten sich TiO₂ und ZrO₂ chemisch inert gegenüber dem bei der Umsetzung entstehenden HF. Sie setzen zusätzlich - wie die bisher eingesetzten Materialien aus Platin oder Palladium auf Aluminiumbasis - in dem Krypton-Xenon-Konzentrat enthaltenes Methan zu CO₂ und H₂O um; außerdem wird N₂O zu N₂ und O₂ gespalten.

Die bei der Umsetzung der Halogenverbindungen ablaufenden Reaktionen sind im Allgemeinen Hydrolysereaktionen, sie benötigen daher bis auf die Zerstörung von C₂F₆ keinen Sauerstoff, setzen jedoch die Anwesenheit von H₂O voraus. Dieses ist jedoch wegen der oben beschriebenen parallelen Umsetzung von Methan ohnehin vorhanden.

Das Katalysatorbett kann anstelle des bisher üblichen Katalysatorbetts zur Umsetzung von Methan eingesetzt oder zusätzlich zu einem solchen. Im letzteren Fall wird das Krypton-Xenon-Konzentrat beispielsweise zuerst bei etwa 400 bis 500°C über ein platin- und/oder palladiumhaltiges Material und anschließend bei etwa 750°C über das Übergangsmetalloxid geleitet. Die beiden Katalysatorbetten können in getrennten Behältern oder in einem gemeinsamen Gehäuse angeordnet sein.

Es ist vorteilhaft, wenn das das Katalysatorbett bei einer Temperatur von 650°C oder mehr, insbesondere von 700°C oder mehr, typischerweise bei etwa 750°C betrieben wird.

Ti02 und ZrO2 können stabilisiert werden, um bei Temperaturen von 650°C bis 700°C ihre Aufgabe erfüllen zu können (siehe Solid State Technology, July 2001, Seiten 189-200).

Bei der Umsetzung wird mindestens ein Halogenwasserstoff, HF und/oder HCl, erzeugt. Vorzugsweise wird das Krypton-Xenon-Konzentrat stromabwärts des Katalysatorbetts einer Reinigungsstufe zur Entfernung des Halogenwasserstoffs zugeleitet, insbesondere einer Wasser- oder Laugenwäsche. Durch die Wäsche kann außerdem SO₃ abgeschieden werden; sie dient auch dazu, den Gasstrom weiter abzukühlen.

In der Regel entsteht bei der Umsetzung außerdem CO₂. Dieses wird aus dem Krypton-Xenon-Konzentrat wieder entfernt, indem es, wie bisher bereits üblich, stromabwärts des Katalysatorbetts durch ein Adsorptionsbett geleitet wird. Das Adsorptionsbett befindet sich vorzugsweise stromabwärts der Reinigungsstufe zur Entfernung des Halogenwasserstoffs.

Vorzugsweise wird in dem Katalysatorbett mindestens eine der Verbindungen CF₄, C₂F₆, SF₆, NF₃, CCIF₃ und C₃F₈ umgesetzt, insbesondere findet mindestens eine der folgenden Reaktionen statt:

CF₄ + 2H₂O → CO₂ + 4 HF

C₂F₆ + 3 H₂O + 0,5 O₂ → 2 CO₂ + 6 HF

SF₆+3 H₂O → SO₃ + 6 HF

NF₃ + 1,5 H₂O → NOₓ + 3 HF

CF₃Cl + 2 H₂O → CO₂ + 3 HF + HCl

Die Erfindung betrifft außerdem eine Vorrichtung zur Gewinnung von Krypton und/oder Xenon durch Tieftemperatur-Luftzerlegung gemäß den Patentansprüchen 8 bis 10.

Die Erfindung sowie weitere Einzelheiten der Erfindung werden im Folgenden anhand eines Ausführungsbeispiels näher erläutert.

Bei dem Ausführungsbeispiel wird die Tieftemperatur-Luftzerlegung in einer klassischen Linde-Doppelsäule durchgeführt, die aus Hochdrucksäule und Niederdrucksäule besteht. Aus dem Sumpf der Niederdrucksäule oder dem Sumpf des Rohargonkondensators wird eine Sauerstofffraktion entnommen, die außerdem alle schwerer flüchtigen Komponenten der Luft enthält und in eine Krypton-Xenon-Anreicherungssäule eingeleitet. Von deren Sumpf wird ein Krypton-Xenon-Konzentrat abgezogen, verdampft und einem bei 750°C betriebenen Katalysatorbett zugeleitet. Nach Abkühlung werden stromabwärts des Katalysatorbetts HF und HCl durch eine Wasserwäsche entfernt. Anschließend durchströmt das Krypton-Xenon-Konzentrat ein Adsorptionsbett, in dem Wasser und CO₂ sowie möglicherweise aus SF₆ entstandenes SO₂ entfernt werden. Das gereinigte Krypton-Xenon-Konzentrat wird schließlich einer Destillationseinrichtung zugeführt, in der Sauerstoff, Argon und Stickstoff abgetrennt und anschließend ein Rein-Krypton- und ein Rein-Xenon-Produkt gewonnen werden.

Alternativ kann das Krypton-Xenon-Konzentrat aus der Doppelsäule beziehungsweise der Krypton-Xenon-Anreicherungssäule in einem Flüssigspeicher aufgefangen und zu einer räumlich entfernten Aufbereitungsanlage transportiert werden, die das erfindungsgemäße Katalysatorbett enthält.

## Patentansprüche

1. Verfahren zur Gewinnung von Krypton und/oder Xenon durch Tieftemperatur-Luftzerlegung, wobei Krypton und Xenon zu einem Krypton-Xenon-Konzentrat angereichert werden und mittels Destillation Krypton und/oder Xenon aus dem Krypton-Xenon-Konzentrat gewonnen werden, **dadurch gekennzeichnet, dass** das Krypton-Xenon-Konzentrat über ein Katalysatorbett geleitet wird, das ein Übergangsmetalloxid, insbesondere TiO₂ und/oder ZrO₂, enthält und in dem Katalysatorbett mindestens eine in dem Krypton-Xenon-Konzentrat enthaltene vollhalogenierte Verbindung, insbesondere mindestens eine vollfluorierte Verbindung, umgesetzt wird.

2. Verfahren nach Anspruch 1, **dadurch gekennzeichnet, dass** das Katalysatorbett bei einer Temperatur von 650°C oder mehr, insbesondere von 700°C oder mehr betrieben wird.

3. Verfahren nach Anspruch 1 oder 2, **dadurch gekennzeichnet, dass** bei der Umsetzung mindestens ein Halogenwasserstoff erzeugt wird und das Krypton-Xenon-Konzentrat stromabwärts des Katalysatorbetts einer Reinigungsstufe zur Entfernung des Halogenwasserstoffs zugeleitet wird.

4. Verfahren nach Anspruch 3, **dadurch gekennzeichnet, dass** die Reinigungsstufe eine Wäsche, insbesondere eine Wasser- oder Laugenwäsche aufweist.

5. Verfahren nach einem der Ansprüche 1 bis 4, **dadurch gekennzeichnet, dass** das Krypton-Xenon-Konzentrat stromabwärts des Katalysatorbetts durch ein Adsorptionsbett geleitet wird.

6. Verfahren nach einem der Ansprüche 1 bis 5, **dadurch gekennzeichnet, dass** in dem Katalysatorbett mindestens eine der Verbindungen CF₄, C₂F₆, SF₆, NF₃, CCIF₃ und C₃F₈ umgesetzt wird.

7. Verfahren nach Anspruch 6, **dadurch gekennzeichnet, dass** in dem Katalysatorbett mindestens eine der folgenden Umsetzungen durchgeführt wird:
CF₄ + 2 H₂O → CO₂ + 4 HF
C2F6 + 3 H2O + 0,5 O2 → 2 CO2 + 6 HF
SF₆ + 3 H₂O → SO₃ + 6 HF
NF₃ + 1,5 H₂O → NOₓ + 3HF
CF₃Cl + 2 H₂O → CO₂ + 3 HF + HCl

8. Vorrichtung zur Gewinnung von Krypton und/oder Xenon durch Tieftemperatur-Luftzerlegung, mit mindestens einer Trennsäule zur Stickstoff-Sauerstoff-Trennung, mit Mitteln zum Abziehen eines Krypton-Xenon-Konzentrats aus der Trennsäule, mit einer Destillationseinrichtung zur Gewinnung von Krypton und/oder Xenon aus dem Krypton-Xenon-Konzentrat, **gekennzeichnet durch** eine Reinigungseinrichtung, die ein Katalysatorbett aufweist, das TiO₂ und/oder ZrO₂ enthält, wobei die Reinigungseinrichtung stromaufwärts der Destillationseinrichtung zur Gewinnung von Krypton und/oder Xenon aus dem Krypton-Xenon-Konzentrat angeordnet ist und Mittel zum Einleiten von Krypton-Xenon-Konzentrat in das Katalysatorbett aufweist.

9. Vorrichtung nach Anspruch 8, **gekennzeichnet durch** ein Reinigungsstufe zur Entfernung von Halogenwasserstoffs aus dem Krypton-Xenon-Konzentrat, wobei die Reinigungsstufe stromabwärts des Katalysatorbetts und stromaufwärts der Destillationseinrichtung angeordnet ist und insbesondere eine Waschsäule aufweist.

10. Vorrichtung nach Anspruch 8 oder 9, **gekennzeichnet durch** ein Adsorptionsbett zur Reinigung des Krypton-Xenon-Konzentrat, das stromabwärts des Katalysatorbetts und stromaufwärts der Destillationseinrichtung angeordnet ist.
